# EUROPÄISCHE PATENTSCHRIFT

(11) **EP 1 228 911 B1**
(45) Veröffentlichungstag und Bekanntmachung des Hinweises auf die Patenterteilung: **11.08.2004**
(21) Anmeldenummer: 02001823.0
(22) Anmeldetag: 26.01.2002
(51) Int. Cl.: B60J 5/04, B60J 5/10, B60J 10/08

(54) **Profilrahmen einer Kraftfahrzeugtür oder -klappe, Kraftfahrzeugtür oder -klappe mit einem Profilrahmen sowie Verfahren zur Herstellung eines Profilrahmens**
Profile frame of a vehicle door or lid, door or lid with such a profile frame and manufacturing method of the profile frame
Armature profilée d'une porte ou hayon de véhicule, porte ou hayon de véhicule avec cette armature et méthode de fabrication de l'armature

(30) Priorität: 06.02.2001 DE 10105603
(43) Veröffentlichungstag der Anmeldung: 07.08.2002
(73) Patentinhaber: Wagon Automotive GmbH, 63857 Waldaschaff (DE)
(72) Erfinder: Konnerth, Eduard, Dipl.-Ing., 63500 Seligenstadt (DE)
(74) Vertreter: Gesthuysen, von Rohr & Eggert

(56) Entgegenhaltungen:
- EP-A- 0 437 188
- DE-A- 2 628 233
- DE-A- 19 854 775
- GB-A- 729 772

## Beschreibung

Die Erfindung betrifft einen Profilrahmen als Fensterrahmen und/oder Türrahmen einer Kraftfahrzeugtür oder -klappe mit den Merkmalen des Oberbegriffs von Anspruch 1, eine Kraftfahrzeugtür mit einem solchen Profilrahmen nach dem Oberbegriff von Anspruch 9 sowie ein Verfahren zur Herstellung eines solchen Profilrahmens nach dem Oberbegriff von Anspruch 11.

Kraftfahrzeugtüren oder -klappen bedürfen der Abdichtung gegenüber den Rahmen der zugeordneten Karosserieausschnitte. Das geschieht regelmäßig über zwei Dichtungen, die am Rahmen des zugeordneten Karosserieausschnittes umlaufen und in der Tiefe des Karosserieausschnittes versetzt hintereinander liegen. Die umlaufenden Dichtungen befinden sich entweder an der Kraftfahrzeugtür oder am Rahmen des Karosserieausschnittes.

Je nach Querschnittsgestaltung der Kraftfahrzeugtür oder -klappe verlaufen die beiden umlaufenden Dichtungen im wesentlichen parallel oder nicht parallel zueinander. Ist eine Kraftfahrzeugtür oder -klappe mit einem Profilrahmen realisiert, so ergibt sich zunächst aufgrund der festliegenden, im Verlauf gleichbleibenden Einbaubreite des Profilrahmens ein paralleler Verlauf der Dichtungen. Ein nicht-paralleler Verlauf muß durch Anbauteile am Profilrahmen realisiert werden.

Weniger problematisch ist die Realisierung nicht-parallel verlaufender umlaufender Dichtungen bei einer Stanzschalentür, da dort die Einbaubreite der Kraftfahrzeugtür oder -klappe herstellungstechnisch durch die Gestaltung der Werkzeuge relativ einfach realisiert werden kann.

Der Stand der Technik zu Profilrahmentüren und Stanzschalentüren wird in der DE 198 54 775 A1 umfangreich erläutert, darauf darf hingewiesen werden. Aus diesem Stand der Technik ergibt sich auch der Ausgangspunkt, von dem die Lehre der vorliegenden Erfindung ausgeht. Die dort realisierte Profilrahmentür zeigt gerade die durchgehend gleiche Einbaubreite des Profilrahmens und die Veränderung der wirksamen Einbaubreite der Kraftfahrzeugtür durch die Verwendung von Anbauteilen am Profilrahmen.

Der Lehre liegt das Problem zugrunde, bei Einsatz eines Profilrahmens in einer Kraftfahrzeugtür oder -klappe eine variierende Einbaubreite des Profilrahmens zu realisieren, ohne daß Anbauteile verwendet werden müssen.

Die zurvor aufgezeigte Problemstellung ist bei einem Profilrahmen mit den Merkmalen des Oberbegriffs von Anspruch 1 durch die Merkmale des kennzeichnenden Teils von Anspruch 1 gelöst. Bevorzugte Ausgestaltungen und Weiterbildungen eines solchen Profilrahmens sind Gegenstand der Ansprüche 2 bis 10.

Durch die auf die gewünschte Einbaubreite des Profilrahmens im jeweiligen Bereich abgestimmte Formatierung des Flansches des Profilrahmens erreicht man ohne Verwendung von zusätzlichen Anbauteilen den gewünschten, nicht-parallelen Verlauf der Dichtungsanlageflächen bzw. Dichtungsanbringungsflächen. Das kann man bereits mit Aufstecken eines Dichtungsprofils auf den freien Rand des Flansches realisieren, besonders zweckmäßig wird das allerdings realisiert, indem der Flansch im jeweils gewünschten Abstand vom Hohlprofil abgebogen (abgestellt) wird, so daß der abgebogene Abschnitt die Dichtungsanlagefläche bzw. die Dichtungsanbringungsfläche bildet.

Die Lehre der Erfindung realisiert sich in gleicher Weise auch an einer Kraftfahrzeugtür mit den Merkmalen des Anspruchs 11. Bevorzugte Ausgestaltungen sind im Anspruch 12 erläutert.

Gegenstand der Lehre ist schließlich auch ein Verfahren wie es im Anspruch 13 beschrieben worden ist. Eine bevorzugte Ausgestaltung des Verfahrens, die die Ausbildung des abgebogenen Abschnittes realisiert, ist Gegenstand des Anspruchs 14.

Im folgenden wird die Erfindung anhand einer lediglich Ausführungsbeispiele darstellenden Zeichnung näher erläutert. In der Zeichnung zeigt
- Fig. 1: in schematischer Darstellung den grundlegenden Aufbau einer Kraftfahrzeugtür mit einem Profilrahmen als Fensterrahmen, in Verbindung mit einem Türkasten mit dort erkennbarer Türau-ßenwandung,
- Fig. 2: einen Schnitt durch den Profilrahmen aus Fig. 1 entlang der Linie II - II,
- Fig. 3: einen Schnitt durch den Profilrahmen aus Fig. 1 entlang der Linie III - III,
- Fig. 4: einen Schnitt durch den Profilrahmen aus Fig. 1 entlang der Linie IV - IV,
- Fig. 5: in einer Fig. 3 ähnlichen Schnittdarstellung eine modifizierte Ausführungsform mit einem aufgesteckten Dichtungsprofil,
- Fig. 6: das Hohlprofil eines erfindungsgemäßen Profilrahmens vor der weiteren Bearbeitung,
- Fig. 7: den Profilrahmen aus Fig. 6 eingespannt in einem Werkzeug zum Beschneiden des freien Randes des Flansches,
- Fig. 8: der Profilrahmen aus Fig. 7 nach dem Beschneiden, jetzt eingespannt in einem Werkzeug zum rechtwinkligen Abstellen des Flansches vor Durchführung dieses Verfahrensschrittes,
- Fig. 9: die Anordnung aus Fig. 8 nach Durchführung des Verfahrensschrittes,
- Fig. 10: in einer Fig. 6 ähnlichen Darstellung ein Hohlprofil eines erfindungsgemäßen Profilrahmens, der durch Rollprofilieren eines Flachbandmaterials hergestellt ist.

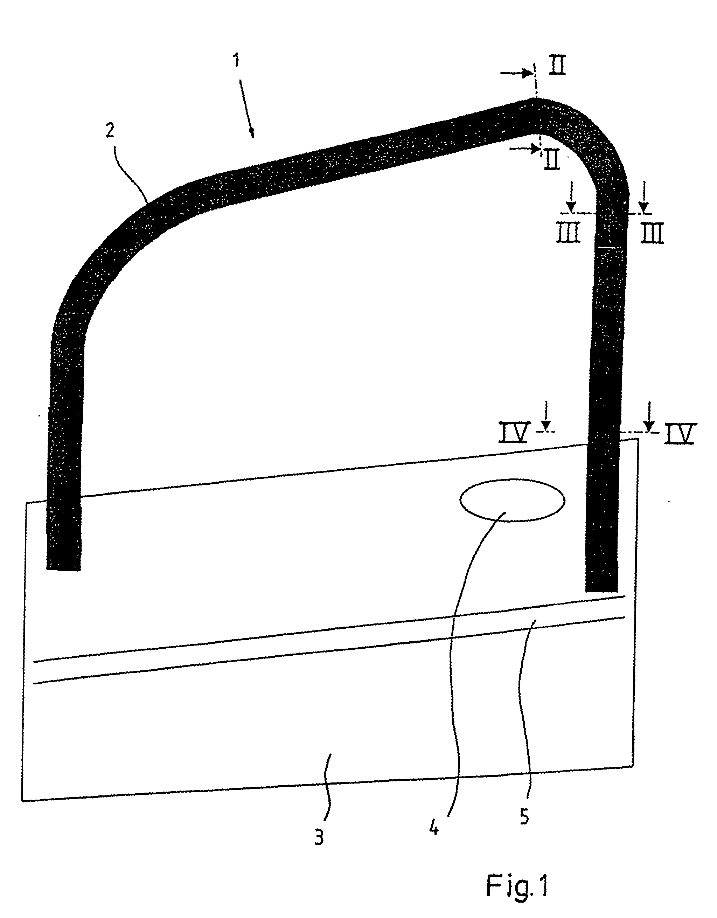

Fig. 1 zeigt als Beispiel für die Anwendung der Erfindung eine Kraftfahrzeugtür 1. An ihrer Stelle könnte auch eine Kraftfahrzeugklappe, beispielsweise eine Heckklappe, vorgesehen sein. Die Kraftfahrzeugtür 1 umfaßt jedenfalls einen Profilrahmen 2, der im dargestellten Ausführungsbeispiel aus Leichtmetall / einer Leichtmetallegierung, insbesondere aus Aluminium / einer Aluminiumlegierung stranggepreßt und streckgebogen worden ist. Der Profilrahmen 2 dient hier als Fensterrahmen der Kraftfahrzeugtür 1, er könnte auch als Türrahmen oder als kombinierter Fensterrahmen und Türrahmen ausgestaltet sein. Dargestellt ist ferner eine Türaußenwandung 3 der Kraftfahrzeugtür 1 mit einer Außengriff-Mulde 4 und einem angedeuteten Seitenaufprallschutz 5. Zu einer Kraftfahrzeugtür oder -klappe gehört im Regelfall auch noch eine Türinnenwandung und/oder -innenverkleidung. Im einzelnen darf als Beispiel für den Aufbau einer entsprechenden Kraftfahrzeugtür auf die DE 198 54 775 A1 und auf den VDI-Bericht "Flush-Glass im Systemvergleich", Nr. 818, 1990, Seiten 43 ff. verwiesen werden.

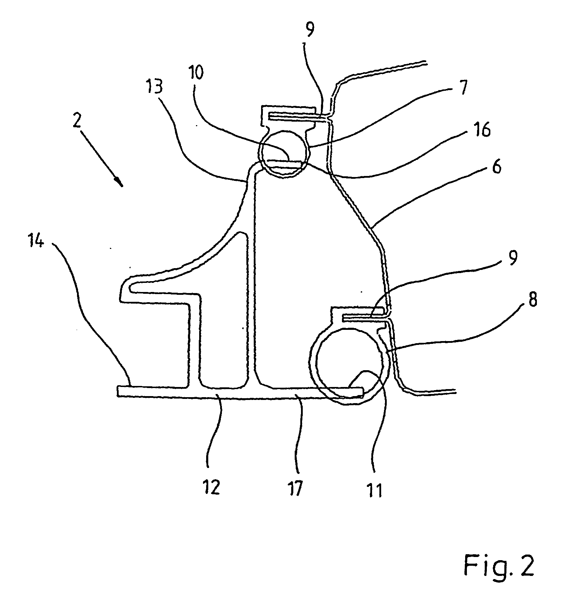

Der Profilrahmen 2 der Kraftfahrzeugtür 1 dient der Führung des Fensters, der Versteifung der Kraftfahrzeugtür 1 insgesamt und der Abdichtung der Kraftfahrzeugtür 1 im Rahmen 6 eines zugeordneten Karosserieausschnittes. Letzteres wird durch umlaufende Dichtungen 7, 8 erreicht, die im Karosserieausschnitt in der Tiefe des Karosserieausschnittes versetzt hintereinander angeordnet sind. Fig. 2 zeigt was gemeint ist. Diese Dichtungen werden im dargestellten Ausführungsbeispiel von vorspringenden Tragflanschen 9 des Rahmens 6 des Karosserieausschnittes getragen.

Um abdichtend wirken zu können, müssen die Dichtungen 7, 8 an Dichtungsanlageflächen 10, 11 am Profilrahmen 2 bzw. an der Kraftfahrzeugtür 1 zur Anlage kommen. Auch das zeigt Fig. 2.

Der Profilrahmen 2 in Fig. 2 zeigt nun zunächst ein hier und nach bevorzugter Ausführung geschlossenes Hohlprofil 12 und mindestens einen daran angeordneten, dem Verlauf des Hohlprofils 12 folgenden Flansch 13. Im dargestellten Ausführungsbeispiel ist eine Aufnahmekammer 14 für ein nicht dargestelltes Fensterführungsprofil ebenfalls am Hohlprofil 12 angeformt.

Der Flansch 13 dient zur Ausbildung einer Dichtungsanlage- oder Dichtungsanbringungsfläche 10, 11. Fig. 2 zeigt die Dichtungen 7, 8 in entspanntem Zustand, der verformte, gespannte Zustand der Dichtungen 7, 8 ergibt sich aus der Lage der jeweiligen Dichtungsanlagefläche 10 bzw. 11.

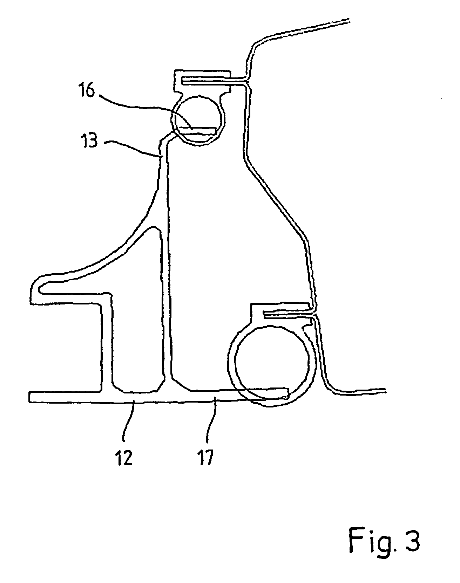

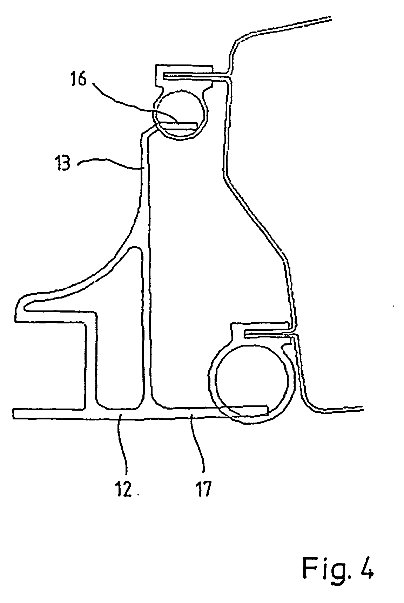

Aus den Fig. 2, 3 und 4 ergibt sich, daß das Hohlprofil 12 in seinem Verlauf einen im wesentlichen unveränderten Querschnitt aufweist. Ein "im wesentlichen unveränderter" Querschnitt des Hohlprofils 12 resultiert daraus, daß das Hohlprofil 12 wie der gesamte Profilrahmen 2 insgesamt zunächst aus dem Extrusionswerkzeug einer Strangpreßvorrichtung mit immer einheitlichem Querschnitt Austritt. Eine Querschnittsveränderung ergibt sich dann im weiteren Verlauf in geringfügiger Weise dadurch, daß das langgestreckte Rohprofil in die gewünschte Form gebracht, insbesondere durch Streckbiegen, ggf. auch durch Rollbiegen entsprechend gebogen wird. Typisch für einen Profilrahmen 2 ist aber, daß abgesehen von diesem sekundären Querschnittsveränderungen geringen Ausmaßes ansonsten keine Querschnittsver-änderungen des Profilrahmens über seinen Verlauf zu verzeichnen sind.

Aus einem Vergleich der Fig. 2, 3 und 4 läßt sich nun der wesentliche Kern der erfindungsgemäßen Lehre entnehmen, nämlich daß der Flansch 13 bezüglich des Hohlprofils 12 in dessen Verlauf auf unterschiedlichen Abstand formatiert ist und so quer zur Verlaufsrichtung des Hohlprofils 12 eine variierende Einbaubreite des Profilrahmens 2 realisiert ist.

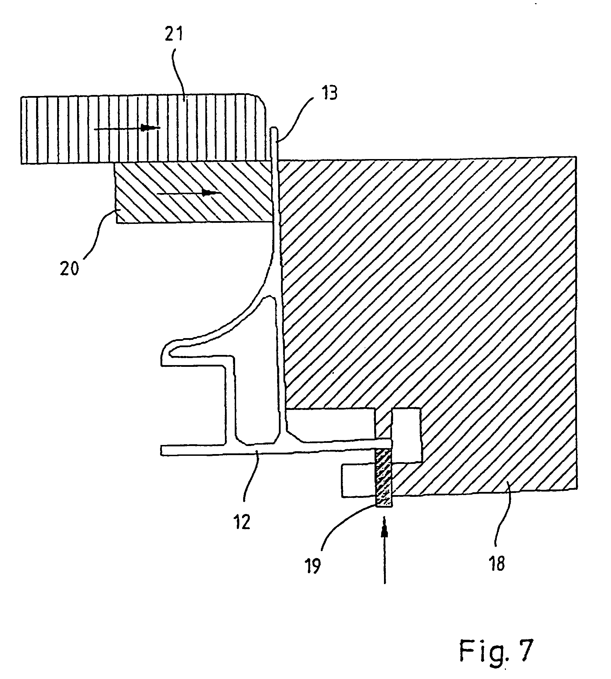

Man könnte sich nun zunächst vorstellen, daß der Flansch 13 am freien Rand im jeweils gewünschten Abstand vom Hohlprofil 12 abgetrennt, insbesondere abschnitten ist. Dies kann man sich anhand von Fig. 7 ohne weiteres vorstellen. Der freie Rand 15 des Flansches 13 kann dann beispielsweise zum Aufstecken eines Dichtungsprofils dienen, wobei dieses Dichtungsprofil dann aufgrund des unterschiedlichen Abstandes über den Verlauf des Hohlprofils 12 einen unterschiedlichen Abstand vom Dichtungsprofil am Hohlprofil 12 bzw. von der entsprechenden Dichtungsanlagefläche 11 am Hohlprofil 12 hätte.

Das dargestellte und insoweit bevorzugte Ausführungsbeispiel zeigt jedoch eine andere Ausführung, die dadurch gekennzeichnet ist, daß der Flansch 13 im jeweils gewünschten Abstand vom Hohlprofil 12 abgebogen, insbesondere abgekantet ist und mit dem abgebogenen Abschnitt die Dichtungsanlageoder Dichtungsanbringungsfläche 10 bildet. Man bezeichnet dieses Abbiegen, insbesondere Abkanten im Abstand von einer Referenzfläche auch als Abstellen.

Das dargestellte Ausführungsbeispiel zeigt, daß hier der Flansch 13 etwa rechtwinklig abgebogen ist.

Das dargestellte und bevorzugte Ausführungsbeispiel zeigt im übrigen, wie man aus einen Vergleich von Fig. 2, 3 und 4 leicht erkennt, daß der Flansch 13 am freien Rand so abgetrennt, insbesondere abgeschnitten ist, daß der abgebogene Abschnitt 16 eine im gesamten Verlauf im wesentlichen konstante Breite aufweist. So hat man eine über den gesamten Verlauf des Profilrahmens 2 einheitliche Breite der Dichtungsanlagefläche 10 bzw. einer entsprechenden Dichtungsanbringungsfläche 11.

Das dargestellte und bevorzugte Ausführungsbeispiel zeigt ferner, daß das Hohlprofil 12 einen Bodenflansch 17 aufweist und der Abstand von Flansch 13 und Bodenflansch 17 die Einbaubreite des Profilrahmens 2 bestimmt. Der Bodenflansch 17 bestimmt hier die untere Dichtungsanlagefläche 11 in den Zeichnungen, das ist die äußere Dichtungsanlagefläche 11 der Kraftfahrzeugtür 1 im Rahmen 6 des Karosserieausschnittes.

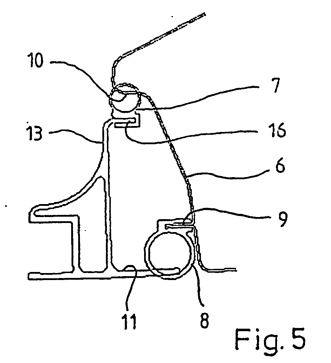

Fig. 5 macht eine Variante deutlich, bei der vorgesehen ist, daß nur ein Tragflansch 9 am Rahmen 6 des Karosserieausschnittes vorgesehen ist und nur eine Dichtung 8 auf diesem einen Tragflansch 9 aufgesteckt ist und mit der Dichtungsanlagefläche 11 des Bodenflansches 17 zusammenwirkt. Demgegenüber trägt der Flansch 13 mit seinem abgebogenen Abschnitt 16 die zweite Dichtung 7. Der Abschnitt 16 realisiert also eine Dichtungsanbringungsfläche, während eine entsprechende Dichtungsanlagefläche am Rahmen 6 realisiert ist.

Hinsichtlich der Gesamtkonstruktion der Kraftfahrzeugtür oder -klappe gemäß den Merkmalen der entsprechenden Ansprüche bedarf es hier keiner weiteren Erläuterung, diese Merkmale wiederholen sich insoweit.

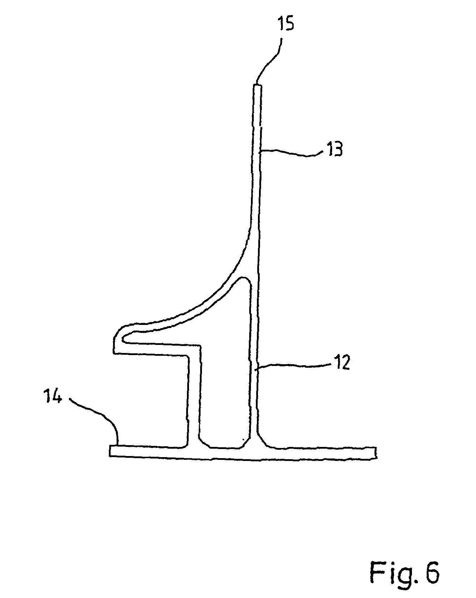

Die Fig. 6 bis 9 erlauben es, eine bevorzugte Variante eines Herstellungsverfahrens für einen erfindungsgemäßen Profilrahmen 2 zu erläutern. Dargestellt ist ein Verfahren zur Herstellung eines solchen Profilrahmens 2, bei dem zunächst das Hohlprofil 12 mit dem Flansch 13 bzw. den Flanschen, nämlich auch dem Bodenflansch 17, stranggepreßt wird. Das Endergebnis zeigt Fig. 6. Im Anschluß daran wird der Flansch 13 am freien Rand 15 auf die gewünschte Breite abgetrennt, insbesondere beschnitten. Dies zeigt Fig. 7. Man erkennt dort eine Matrize 18, an der der Profilrahmen 2 mittels eines Klemmstücks 19 fixiert ist. Ein Niederhalter 20 fixiert separat den Flansch 13 an der Matrize 18. Der überstehende Teil des Flansches 13 wird mittels eines Schneidwerkzeugs 21 abgeschnitten, und zwar längenvariabel, so daß sich die gewünschte Formatierung des Flansches 13 ergibt. Das ist durch die Pfeile angedeutet.

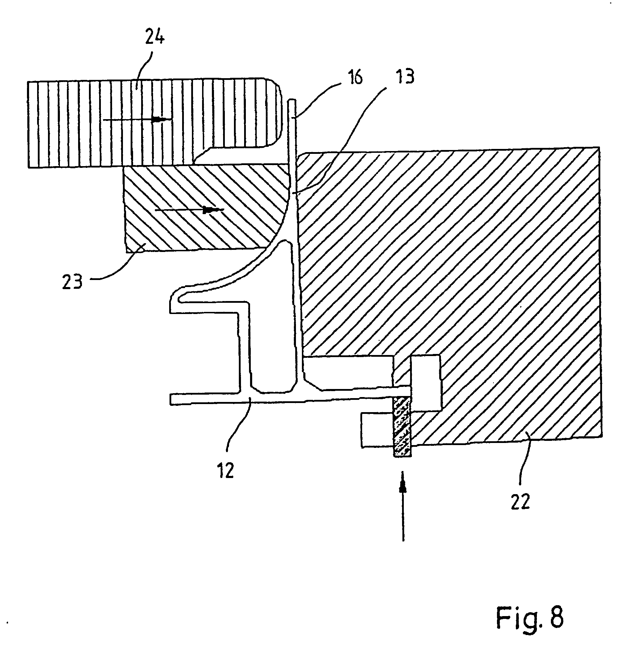

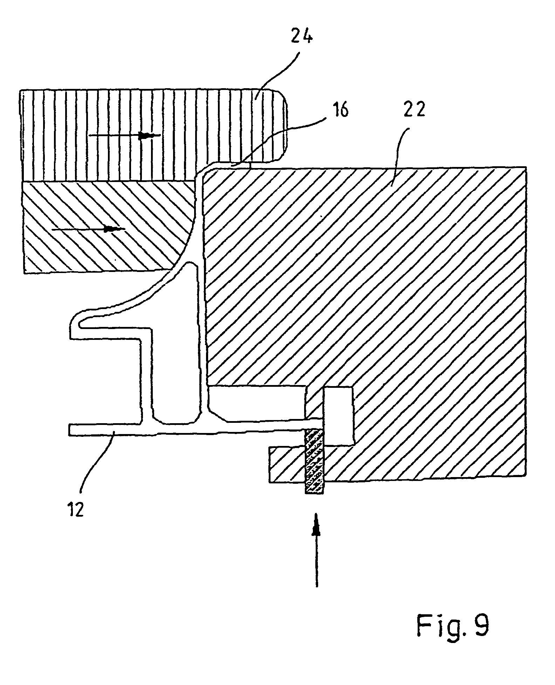

Fig. 8 zeigt, daß in einem weiteren Verfahrensschritt der Flansch 13 im jeweils gewünschten Abstand vom Hohlprofil 12 abgebogen wird. Dazu dient hier eine Abkantmatrize 22 mit einer entsprechenden Verrundung, ein entsprechend passend geformter Niederhalter 23 und ein entsprechend geformtes, mit einem Radius versehenes Abkantwerkzeug 24. Fig. 9 zeigt das zugefahrene Abkantwerkzeug 24 mit dem jetzt rechtwinklig abgebogenen Abschnitt 16 des Flansches 13.

Vom Verfahrensablauf her bietet es sich an, das Beschneiden des Flansches 13 vor dem Abkanten vorzunehmen und insgesamt das Streckbiegen oder Rollbiegen des noch langgestreckten Profilrahmens 2 nach dem Beschneiden und Abkanten vorzunehmen.

Als Werkstoff für den Profilrahmen 2 empfiehlt sich, wie eingangs schon angesprochen, Leichtmetall / Leichtmetallegierungen, insbesondere Aluminium / Aluminiumlegierungen. Hierfür ist das Streckbiegen ein besonders zweckmäßiger Verformungsvorgang. Aber auch ein Rollbiegen oder andere materialbezogen passende Verformungsverfahren lassen sich einsetzen, sofern sie hinreichend kostengünstig durchführbar sind.

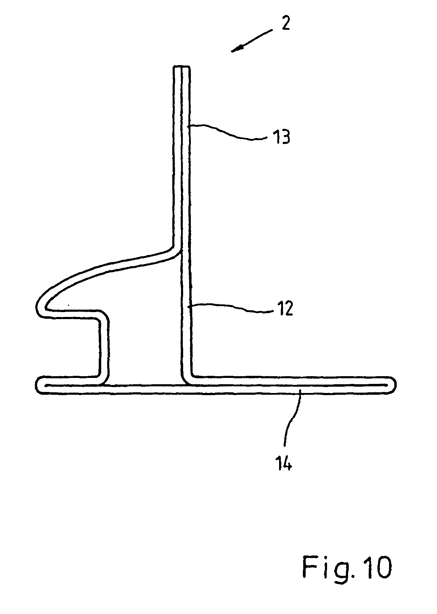

Als Werkstoff für den Profilrahmen 2 kann man auch ein Flachbandmaterial, insbesondere aus Stahl, aber auch aus Leichtmetall, wenn dies kostenmäßig gut zu realisieren ist, verwenden. Das Flachbandmaterial wird dann durch Rollprofilieren in seine gewünschte Form für den Profilrahmen 2 gebracht. Ein Beispiel dafür findet sich in Fig. 10.

## Patentansprüche

1. Profilrahmen als Fensterrahmen und/oder Türrahmen einer Kraftfahrzeugtür oder -klappe
mit einem vorzugsweise geschlossenen Hohlprofil (12) und mindestens einem daran angeordneten, dem Verlauf des Hohlprofils (12) folgenden Flansch (13) zur Ausbildung einer Dichtungsanlage- oder Dichtungsanbringungsfläche (10,11),
wobei das Hohlprofil (12) in seinem Verlauf einen im wesentlichen unveränderten Querschnitt aufweist,
**dadurch gekennzeichnet,**
**daß** der Flansch (13) bezüglich des Hohlprofils (12) in dessen Verlauf auf unterschiedlichen Abstand formatiert ist und so quer zur Verlaufsrichtung des Hohlprofils (12) eine variierende Einbaubreite des Profilrahmens (2) realisiert ist.

2. Profilrahmen nach Anspruch 1, **dadurch gekennzeichnet, daß** der Flansch (13) am freien Rand (15) im jeweils gewünschten Abstand vom Hohlprofil (12) abgetrennt, insbesondere abgeschnitten ist.

3. Profilrahmen nach Anspruch 1, **dadurch gekennzeichnet, daß** der Flansch (13) im jeweils gewünschten Abstand vom Hohlprofil (12) abgebogen, insbesondere abgekantet ist und mit dem abgebogenen Abschnitt (16) die Dichtungsanlage- oder Dichtungsanbringungsfläche (10) bildet,
vorzugsweise, daß der Flansch (13) etwa rechtwinklig abgebogen ist und/oder,
vorzugsweise, daß der Flansch (13) am freien Rand so abgetrennt, insbesondere abgeschnitten ist, daß der abgebogene Abschnitt (16) eine im gesamten Verlauf im wesentlichen konstante Breite aufweist.

4. Profilrahmen nach einem der Ansprüche 1 bis 3, **dadurch gekennzeichnet, daß** das Hohlprofil (12) einen Bodenflansch (17) aufweist und der Abstand von Flansch (13) und Bodenflansch (17) die Einbaubreite des Profilrahmens (2) bestimmt und,
vorzugsweise, daß der Bodenflansch (17) ebenfalls eine Dichtungsanlageoder Dichtungsanbringungsfläche (11) definiert.

5. Profilrahmen nach einem der Ansprüche 1 bis 4, **dadurch gekennzeichnet, daß** der Profilrahmen (2) aus Leichtmetall / einer Leichtmetallegierung, insbesondere aus Aluminium / einer Aluminiumlegierung besteht und,
vorzugsweise, daß der Profilrahmen (2) als Strangpreßprofil ausgeführt ist.

6. Profilrahmen nach einem der Ansprüche 1 bis 5, **dadurch gekennzeichnet, daß** der Profilrahmen als Rollprofil aus einem Flachbandmaterial, insbesondere aus Stahl- Flachbandmaterial, ausgeführt ist.

7. Kraftfahrzeugtür oder -klappe mit einem Profilrahmen (2) als Fensterrahmen und/oder Türrahmen, einer Türaußenwandung (3) und einer Türinnenwandung und/oder -innenverkleidung,
wobei der Profilrahmen (2) ein vorzugsweise geschlossenes Hohlprofil (12) und mindestens einen daran angeordneten, dem Verlauf des Hohlprofils (12) folgenden Flansch (13) zur Ausbildung einer Dichtungsanlage- oder Dichtungsanbringungsfläche (10, 11) aufweist,
wobei das Hohlprofil (12) in seinem Verlauf einen im wesentlichen unveränderten Querschnitt aufweist und
wobei die quer zur Verlaufsrichtung des Profilrahmens (2) realisierte Einbaubreite durch zwei entlang der Verlaufsrichtung des Profilrahmens (2) angeordnete Dichtungsanlage- oder Dichtungsanbringungsflächen (10, 11) repräsentiert ist,
**dadurch gekennzeichnet,**
**daß** die Dichtungsanlage- oder Dichtungsanbringungsflächen (10, 11) nicht parallel zueinander verlaufend angeordnet und/oder ausgebildet sind und
**daß** dazu der Flansch (13) des Profilrahmens (2) bezüglich des Hohlprofils (12) in dessen Verlauf auf unterschiedlichen Abstand formatiert ist und so quer zur Verlaufsrichtung des Hohlprofils (12) eine variierende Einbaubreite des Profilrahmens (2) realisiert ist.

8. Kraftfahrzeugtür oder -klappe nach Anspruch 7, **gekennzeichnet durch** die Merkmale des kennzeichnenden Teils eines oder mehrerer der Ansprüche 2 bis 6.

9. Verfahren zur Herstellung eines Profilrahmens (2) als Fensterrahmen und/oder Türrahmen einer Kraftfahrzeugtür oder -klappe,
wobei der Profilrahmen (2) ein vorzugsweise geschlossenes Hohlprofil (12) und mindestens einen daran angeordneten, dem Verlauf des Hohlprofils (12) folgenden Flansch (13) zur Ausbildung einer Dichtungsanlage- oder Dichtungsanbringungsfläche (10, 11) aufweist,
wobei das Hohlprofil (12) in seinem Verlauf einen im wesentlichen unveränderten Querschnitt aufweist,
bei dem in einem ersten Verfahrensschritt, Verfahrensschritt a), das Hohlprofil (12) mit dem Flansch (13) bzw. den Flanschen stranggepreßt oder aus einem Flachbandmaterial rollprofiliert wird und
danach in einem weiteren Verfahrensschritt, Verfahrensschritt b), das Hohlprofil (12) durch Streckbiegen oder einen anderweitigen Verformungsvorgang, insbesondere durch Rollbiegen, in die gewünschte Form gebogen wird,
**dadurch gekennzeichnet,**
**daß** vorzugsweise vor dem Verfahrensschritt b), der Flansch (13) am freien Rand (15) auf die gewünschte Breite abgetrennt, insbesondere abgeschnitten wird.

10. Verfahren nach Anspruch 9, **dadurch gekennzeichnet, daß**, vorzugsweise vor dem Verfahrensschritt b) und jedenfalls nach dem Abtrennen des Flansches (13) am freien Rand (15), der Flansch (13) im jeweils gewünschten Abstand vom Hohlprofil (12) abgebogen, vorzugsweise rechtwinklig abgebogen wird.

11. Verfahren nach Anspruch 9 oder 10, **dadurch gekennzeichnet, daß** der Profilrahmen (2), der im Verfahrensschritt a) durch Strangpressen hergestellt wird, aus Leichtmetall/einer Leichtmetallegierung, insbesondere aus Aluminium/einer Aluminiumlegierung besteht oder daß der Profilrahmen (2), der im Verfahrensschritt a) durch Rollprofilieren hergestellt wird, aus Stahl- oder Leichtmetall- Flachbandmaterial besteht.

## Claims

1. A profile frame as a window frame and/or door frame of a vehicle door or lid
with a preferably closed hollow profile (12) and at least one flange (13) arranged thereon and following the course of the hollow profile (12), said flange being for the formation of a seal-locating or seal-mounting surface (10, 11),
whereby the hollow profile (12) exhibits an essentially unchanged cross-section in its course,
**characterised in that**
the flange (13) is formatted in its course at a varying distance with respect to the hollow profile (12) and a varying mounting width of the profile frame (2) is thus created at right angles to the direction of the course of the hollow profile (12).

2. The profile frame according to claim 1, **characterised in that** the flange (13) is severed, in particular cut off, at the free edge (15) at the given desired distance from the hollow profile (12).

3. The profile frame according to claim 1, **characterised in that** the flange (13) is bent off, in particular canted off, at the given desired distance from the hollow profile (12) and forms with the bent-off section (16) the seal-locating or seal-mounting surface (10),
preferably that the flange (13) is bent off roughly at right angles and/or,
preferably that the flange (13) is severed, in particular cut-off, at the free edge in such a way that the bent-off section (16) has an essentially constant width over the whole course.

4. The profile frame according to any one of claims 1 to 3, **characterised in that** the hollow profile (12) has a bottom flange (17) and the spacing between flange (13) and bottom flange (17) determines the mounting width of the profile frame (2) and,
preferably, that the bottom flange (17) also defines a seal-locating or seal-mounting surface (11).

5. The profile frame according to any one of claims 1 to 4, **characterised in that** the profile frame (2) is made of light metal / a light-metal alloy, in particular of aluminium / an aluminium alloy and,
preferably, that the profile frame (2) is designed as an extruded profile.

6. The profile frame according to any one of claims 1 to 5, **characterised in that** the profile frame is designed as a roll profile of a flap-strip material, in particular of steel flat-strip material.

7. A vehicle door or lid with a profile frame (2) as a window frame and/or door frame, a door exterior panel (3) and a door interior panel and/or interior trim,
whereby the profile frame (2) has a preferably closed hollow profile (12) and at least one flange (13) arranged thereon and following the course of the hollow profile (12), said flange being for the formation of a seal-locating or seal-mounting surface (10, 11),
whereby the hollow profile (12) exhibits an essentially unchanged cross-section in its course and
whereby the mounting width created at right angles to the direction of the course of the profile frame (2) is represented by two seal-locating or seal-mounting surfaces (10, 11) arranged along the direction of the course of the profile frame (2),
**characterised in that**
the seal-locating or seal-mounting surfaces (10, 11) are arranged and/or formed not running parallel to one another and
that, in addition, flange (13) of the profile frame (2) is formatted in its course at a varying distance with respect to the hollow profile (12) and a varying mounting width of the profile frame (2) is created at right angles to the direction of the course of the hollow profile (12).

8. The vehicle door or lid according to claim 7, **characterised by** the features of the **characterising** part of one or more of claims 2 to 6.

9. A method for the manufacture of a profile frame (2) as a window frame and/or door frame of a vehicle door or lid,
whereby the profile frame (2) has a preferably closed hollow profile (12) and at least one flange (13) arranged thereon and following the course of the hollow profile (12), said flange being for the formation of a seal-locating or seal-mounting surface (10, 11),
whereby the hollow profile (12) exhibits an essentially unchanged cross-section in its course,
wherein, in a first process step; process step a), the hollow profile (12) with the flange (13), or the flanges, is extruded or roll-profiled from a flat-strip material and
thereafter, in a further process step, process step b), the hollow profile (12) is bent into the desired shape by stretch-bending or another deformation process, in particular by roll-bending,
**characterised in that**,
preferably before process step b), the flange (13) is severed, in particular cut-off, at the free edge (15) to the desired width.

10. The method according to claim 9, **characterised in that**, preferably before process step b) and in any event after the severing of the flange (13) at the free edge (15), the flange (13) is bent off, preferably bent off at right angles, at the given desired distance from the hollow profile (12).

11. The method according to claim 9 or 10, **characterised in that** the profile frame (2) which is produced by extrusion in process step a) is made of light metal/a light-metal alloy, in particular of aluminium/aluminium alloy or that the profile frame (2) which is produced in process step a) by roll-profiling is made of steel flat-strip material or light-metal flat-strip material.

## Revendications

1. Armature profilée en guise de cadre de vitre et/ou de portière d'une portière ou d'un hayon de véhicule automobile avec un profil creux (12) de préférence fermé et au moins une bride (13) aménagée dessus, laquelle bride épouse le tracé du profil creux (13) pour former un dispositif de calfeutrage ou une surface d'adjonction d'un calfeutrage (10, 11), moyennant quoi le profil creux (12) présente une section essentiellement non variable de son tracé,
**caractérisée en ce que**
la bride (13), en ce qui concerne le profil creux (12), est formatée dans le tracé de celui-ci à distance différenciée, et **en ce qu'**une largeur d'encastrement de l'armature profilée (2) qui varie est ainsi réalisée transversalement au sens du tracé du profil creux (12).

2. Armature profilée selon la revendication 1,
**caractérisée en ce que** la bride (13) sur le bord (15) libre est tronçonnée, et en particulier sectionnée à la distance respective souhaitée par rapport au profil creux (12).

3. Armature profilée selon la revendication 1,
**caractérisée en ce que** la bride (13) est courbée, et en particulier repliée à la distance respectivement souhaitée par rapport au profil creux (12), et **en ce qu'**elle forme, avec la partie (16) courbée, le dispositif de calfeutrage ou la surface d'adjonction du calfeutrage (10), et **en ce que** la bride (13) est de préférence courbée à peu près en angle droit, et/ou **en ce que** la bride (13) est de préférence tronçonnée, et en particulier sectionnée sur le bord libre, de manière à ce que la partie (16) courbée présente une largeur essentiellement constante du tracé global.

4. Armature profilée selon l'une quelconque des revendications 1 à 3, **caractérisée en ce que** le profil creux (12) présente une bride du fond (17) et **en ce que** l'écartement de la bride (13) et de la bride du fond (17) détermine une largeur d'encastrement de l'armature profilée (2), et **en ce que** la bride du fond (17) définie de préférence également un dispositif de calfeutrage ou une surface d'adjonction du calfeutrage (11).

5. Armature profilée selon l'une quelconque des revendications 1 à 4, **caractérisée en ce que** l'armature profilée (2) se compose de métal léger/d'un alliage à base de métal léger, en particulier d'aluminium/d'un alliage à base d'aluminium, et **en ce que** l'armature profilée (2) est de préférence réalisée en tant que profilé filé.

6. Armature profilée selon l'une quelconque des revendications 1 à 5, **caractérisée en ce que** l'armature profilée est réalisée en tant que profilé roulé à partir d'un feuillard plat, en particulier un feuillard plat en acier.

7. Portière ou hayon de véhicule automobile avec une armature profilée (2) en guise de cadre de vitre et/ou cadre de portière, une paroi externe de portière (3) et une paroi interne et/ou revêtement intérieur de portière, où l'armature profilée (2) présente un profil creux (12) de préférence fermé et au moins une bride (13) aménagée dessus et qui épouse le tracé du profil creux (12) pour la formation d'un dispositif de calfeutrage ou d'une surface d'adjonction du calfeutrage (10, 11), moyennant quoi le profil creux (12) présente une section essentiellement inchangée de son tracé, et moyennant quoi la largeur d'encastrement réalisée transversalement au sens du tracé de l'armature profilée (2) est représentée par deux dispositifs de calfeutrage ou surfaces d'adjonction du calfeutrage (10, 11) disposés le long du sens du tracé de l'armature profilée (2),
**caractérisée en ce que**
le dispositif de calfeutrage ou les surfaces d'adjonction du calfeutrage (10, 11) ne sont pas disposées et/ou réalisées de manière à s'étendre parallèlement l'une par rapport à l'autre, et **en ce qu'**à cet effet la bride (13) de l'armature profilée (2) est formatée à distance différenciée en ce qui concerne le profil creux (12) et dans le tracé de celui-ci, et **en ce qu'**une largeur d'encastrement variable de l'armature profilée (2) est ainsi réalisée transversalement au sens du tracé du profil creux (12).

8. Portière ou hayon de véhicule automobile selon la revendication 7, **caractérisé par** les caractéristiques de la partie caractérisante de l'une quelconque ou plusieurs des revendications 2 à 6.

9. Procédé pour la fabrication d'une armature profilée (2) en guise de cadre de vitre et/ou cadre de portière d'une portière ou d'un hayon de véhicule automobile, où l'armature profilée (2) présente un profil creux (12) de préférence fermé et au moins une bride (13) aménagée dessus, laquelle bride épouse le tracé du profil creux (12) pour la formation du dispositif de calfeutrage ou de surfaces d'adjonction du calfeutrage (10, 11), moyennant quoi le profil creux (12) présente une section essentiellement inchangée de son tracé, avec lequel, au cours d'une première étape du procédé, l'étape a) du procédé, le profil creux (12) est extrudé avec la bride (13) et/ou les brides, ou bien est profilé par roulage à partir d'un feuillard plat, et où ensuite au cours d'une deuxième étape du procédé, l'étape b) du procédé, le profil creux (12) est courbé pour prendre la forme voulue grâce à une flexion par traction ou un autre processus de déformation, en particulier grâce au roulage,
**caractérisé en ce que**
de préférence avant l'étape b) du procédé, la bride (13) est tronçonnée sur le bord libre (15), et en particulier sectionnée, pour la largeur voulue.

10. Procédé selon la revendication 9, **caractérisé en ce que** de préférence avant l'étape b) du procédé, et en tous les cas après le tronçonnage de la bride (13) sur le bord libre (15), la bride (13) est courbée à distance respectivement souhaitée par rapport au profil creux (12), et est de préférence courbée en angle droit.

11. Procédé selon l'une quelconque des revendications 9 ou 10, **caractérisé en ce que** l'armature profilée (2) fabriquée par extrusion au cours de l'étape a) du procédé, se compose de métal léger/d'un alliage à base de métal léger, en particulier d'aluminium/d'un alliage à base d'aluminium, ou **en ce que** l'armature profilée (2) fabriquée par profilage par roulage au cours de l'étape a) du procédé, se compose d'un feuillard plat en acier ou métal léger.
